# EUROPEAN PATENT APPLICATION

(11) **EP 4 648 258 A1**
(43) Date of publication of application: **12.11.2025**
(21) Application number: 24219775.4
(22) Date of filing: 13.12.2024
(51) Int. Cl.: H02J 13/00, H02J 3/00

(54) **METHOD, APPARATUS, DEVICE AND STORAGE MEDIUM FOR CONFIGURING POWER DISTRIBUTION LINK DIAGRAM**

(30) Priority: 06.05.2024 CN 202410551114
(71) Applicant: Vertiv Corporation, Westerville, OH 43082 (US)
(72) Inventor: HOU, Jiexi, Xi an 710005 (CN); GAO, Feng, Xi an 710005 (CN); LIU, Songkang, Xi an 710005 (CN); WANG, Longbo, Xi an 710005 (CN)
(74) Representative: Harden, Henry Simon

(57) **Abstract**

Provided in the present disclosure are a method, an apparatus, a device, and a storage medium for configuring a power distribution link diagram. A first user operation performed by a user on a power distribution device list in a first interface is received, a presentation model corresponding to an object selected by the first user operation is generated in response to the first user operation, and the presentation model is displayed in a configuration area of the first interface. The power distribution link between presentation models is generated and displayed on reception of and in response to a second user operation. The configuration panel for a target presentation model and/or a target power distribution link is generated, on reception of and in response to a third user operation on the target presentation model and/or the target power distribution link. The configuration panel is for configuring attribute information of a power distribution device corresponding to the target presentation model and/or the target power distribution link. The method for quickly configuring a power distribution link diagram is provided, with which all power distribution devices in an entire data center and distribution links thereof can be easily viewed, a visualization level of the power distribution link diagram is improved, and an operation complexity is reduced. Hence, a great convenience is realized for power distribution maintenance and management of the data center.

## Description

This application claims the benefit and priority of Chinese Application No.2024105 51114.9, filed on May 6, 2024, the entire disclosure of which is incorporated herein by reference.

### FIELD

The present disclosure relates to the field of electric power technology, and in particular to a method, an apparatus, a device, and a storage medium for configuring a power distribution link diagram.

### BACKGROUND

With the development of artificial intelligence, a data center is facing a new round of growth demands. Meanwhile, power distribution links in the data center become more complex. Currently, an important power distribution facility usually adopts a 2N or N+1 redundant power configuration solution. With such solution, a complexity of the entire power distribution system is greatly increased, posing new challenges to maintenance of power distribution devices in the data center, and making troubleshooting in power distribution links more difficult. Therefore, to help maintenance personnel view and locate faults more conveniently, a visual power distribution link diagram is proposed.

In the visual power distribution link diagram, all power distribution devices are presented in a three-dimensional diagram and are connected to each other through lines. Such a power distribution link diagram allows users to clearly learn about connection relationships of power distribution devices in the entire data center and understand directions of the power distribution links. More importantly, when a power distribution device or a power distribution link has an abnormality, the power distribution link diagram can help users quickly and accurately locate a fault and determine any upstream and downstream device that may be affected, so that the fault can be quickly repaired.

However, most of the existing visualization technologies can display only one or a few devices, and cannot fully display the power distribution links and relative positions of the devices in the entire data center. Moreover, due to the professionalism and complexity of the power distribution link diagram, configuration of the power distribution link diagram is a difficult task for non-professionals.

### SUMMARY

The present disclosure provides a method, an apparatus, a device and a storage medium for configuring a power distribution link diagram, with which the defects in visualization of the power distribution link diagram and the technical problem of complex configuration work in the conventional technology can be solved.

In a first aspect, a method for configuring a power distribution link diagram is provided in the present disclosure. The method includes:
receiving a first user operation performed by a user on a power distribution device list in a first interface, generating a presentation model corresponding to an object selected by the first user operation in response to the first user operation, and displaying the presentation model in a configuration area of the first interface, wherein the presentation model includes a power distribution device model and/or a micro-site model composed of power distribution devices;
generating a power distribution link between presentation models on reception of and in response to a second user operation, and displaying the power distribution link; and
generating and displaying a configuration panel for a target presentation model and/or a target power distribution link, on reception of and in response to a third user operation on the target presentation model and/or the target power distribution link, wherein the configuration panel is for configuring attribute information of a power distribution device corresponding to the target presentation model and/or the target power distribution link during operation.

A method for quickly configuring a power distribution link diagram is provided, with which a user is allowed to easily view all power distribution devices in an entire data center and distribution links thereof, a visualization level of the power distribution link diagram is improved, and an operation complexity of configuring the power distribution link diagram is reduced. Hence, a great convenience is realized for power distribution maintenance and management of the data center.

In a possible design, the first interface further includes a toolbar area; and
the toolbar area includes a custom tool for configuring the power distribution link diagram, and the custom tool includes at least one of a line drawing tool, an adjustment tool, a deletion tool, and an undo operation tool.

The first interface is configured with a toolbar area, which facilitates the user to perform a configuration operation on the power distribution link diagram by utilizing the custom tool displayed in the toolbar area. The custom tool includes, but is not limited to, a line drawing tool, an adjustment tool, a deletion tool, and an undo operation tool or the like, with which a flexibility and convenience of configuration operations can be improved.

In a possible design, the generating a power distribution link between presentation models in response to the second user operation includes:
generating the power distribution link between the power distribution device models according to a positional relationship between power distribution devices in the power distribution device models, in response to the second user operation on the power distribution device models; and/or
generating and displaying a selection pop-up box in response to the second user operation on the power distribution device model and the micro-site model, and generating the power distribution link between a power distribution device selected from the micro-site model and the power distribution device model on reception of and in response to a selection operation on the selection pop-up box.

Based on the second user operation, the power distribution link is generated between the power distribution device models and/or between the power distribution device in the micro-site model and the power distribution device model, so that the configuration of the power distribution link in the power distribution link diagram is completed.

In a possible design, the generating and displaying a configuration panel for a target presentation model and/or a target distribution link, in response to a third user operation on the target presentation model and/or the target distribution link, includes:
generating and displaying a device configuration panel for a power distribution device corresponding to the target presentation model, in response to the third user operation on the target presentation model, wherein the target presentation model is a presentation model selected by the third user operation; and
generating and displaying a link configuration panel for the target power distribution link in response to the third user operation on the target power distribution link, wherein the target power distribution link is a power distribution link selected by the third user operation;
wherein the configuration panel includes the device configuration panel and/or the link configuration panel.

Configuration of the configuration panel is completed based on the third user operation. The configuration panel is for configuring the attribute information of the target presentation model and/or the target power distribution link, so that the user can learn the attribute information of the target presentation model and target power distribution link thereof during operation in time, and any fault can be located accurately and quickly.

In a possible design, the method further includes:
on reception of and in response to a custom configuration operation on a display page of the device configuration panel and/or the link configuration panel, acquiring an attribute category selected by the custom configuration operation, wherein the attribute category is a category of the attribute information.

Through the configuration panel, the user is allowed to configure a category of the attribute information according to a user demand, which facilitates display of the attribute information of the configured attribute category. Hence, the users can learn a status of the power distribution devices and the power distribution link in time, and a fault can be located quickly.

In a possible design, the method further includes:
receiving a fourth user operation on a first target power distribution device, and generating a status progress bar in response to the fourth user operation, wherein the status progress bar is for presenting a health status of the first target power distribution device.

Based on the fourth user operation, the health status of the power distribution device can be presented through the power distribution link diagram, which facilitates prediction of a possible fault in the power distribution device and is beneficial to management and maintenance of the power distribution device.

In a possible design, the method further includes:
receiving a fifth user operation on a second target power distribution device and/or a first target power distribution link, and displaying an attribute display panel in response to the fifth user operation, wherein the attribute display panel is for displaying the respective attribute information of the second target power distribution device and/or the first target power distribution link during operation.

Through the fifth user operation, the attribute information of the selected corresponding power distribution device and/or the power distribution link during operation can be displayed in the power distribution link diagram. Hence, the user can obtain the attribute information in real time.

In a possible design, the method further includes:
receiving a sixth user operation on a second target power distribution link, and displaying an upstream power distribution device and a downstream power distribution device connected to the second target power distribution link in response to the sixth user operation.

Through the sixth user operation, the upstream power distribution device and the downstream power distribution device of the power distribution link selected by the sixth user operation can be displayed in the power distribution link diagram. In a case where a power distribution device or power distribution link has an abnormality, the upstream and downstream power distribution devices of the power distribution link having the abnormality can be located quickly, which facilitates repair of the abnormality.

In a possible design, the method further includes:
receiving a seventh user operation on the third target power distribution link, and hiding the third target power distribution link or identifying the third target power distribution link with a feature in response to the seventh user operation.

Through the seventh user operation, the corresponding power distribution link selected by the seventh user operation can be displayed or identified with a feature in the power distribution link diagram, so that the user can adjust the power distribution link which is identifiable with a feature, as needed.

In a possible design, the method further includes:
acquiring the attribute information of a third target power distribution device and/or a fourth target power distribution link; and
generating an early warning signal and performing an early warning according to the early warning signal, on determining, based on the attribute information, that there is an abnormality in the third target power distribution device and/or the fourth target power distribution link.

The early warning signal is generated based on the attribute information. Through the early warning signal, the abnormal power distribution device and/or power distribution link can be early warned in time so that maintenance personnel can be notified. In this way, an early warning notification capability of the power distribution link diagram is improved.

In a second aspect, an apparatus for configuring a power distribution link diagram is provided in the present disclosure. The apparatus includes:
a model generation module, configured to receive a first user operation performed by a user on a power distribution device list in a first interface, generate a presentation model corresponding to an object selected by the first user operation in response to the first user operation, and display the presentation model in a configuration area of the first interface, wherein the presentation model includes a power distribution device model and/or a micro-site model composed of power distribution devices;
a link generation module, configured to generate a power distribution link between presentation models on reception of and in response to a second user operation, and display the power distribution link; and
a data generation module, configured to generate and display a configuration panel for a target presentation model and/or a target power distribution link, on reception of and in response to a third user operation on the target presentation model and/or the target power distribution link, wherein the configuration panel is for configuring attribute information of a power distribution device corresponding to the target presentation model and/or the target power distribution link during operation.

The apparatus for quickly configuring a power distribution link diagram is provided, with which a user is allowed to easily view all power distribution devices in an entire data center and power distribution links thereof, a visualization level of the power distribution link diagram of the data center is improved, and an operation complexity is reduced. Hence, a great convenience is realized for power distribution maintenance and management of the data center.

In a possible design, the first interface further includes a toolbar area; and
the toolbar area includes a custom tool for configuring the power distribution link diagram, and the custom tool includes at least one of a line drawing tool, an adjustment tool, a deletion tool, and an undo operation tool.

The first interface is configured with a toolbar area, which facilitates the user to perform a configuration operation on the power distribution link diagram by utilizing the custom tool displayed in the toolbar area. The custom tool includes, but is not limited to, a line drawing tool, an adjustment tool, a deletion tool, and an undo operation tool or the like, with which a flexibility and convenience of configuration operations can be improved. In a possible design, the link generation module is specifically configured to:
generate the power distribution link between the power distribution device models according to a positional relationship between power distribution devices in the power distribution device models, in response to the second user operation on the power distribution device models; and/or
generate and display a selection pop-up box in response to the second user operation on the power distribution device model and the micro-site model, and generate the power distribution link between a power distribution device selected from the micro-site model and the power distribution device model on reception of and in response to a selection operation on the selection pop-up box.

Based on the second user operation, the power distribution link is generated between the power distribution device models and/or between the power distribution device in the micro-site model and the power distribution device model, so that the configuration of the power distribution link in the power distribution link diagram is completed.

In a possible design, the data generation module is specifically configured to:
generate and display a device configuration panel for a power distribution device corresponding to the target presentation model, in response to the third user operation on the target presentation model, wherein the target presentation model is a presentation model selected by the third user operation; and
generate and display a link configuration panel for the target power distribution link in response to the third user operation on the target power distribution link, wherein the target power distribution link is a power distribution link selected by the third user operation;
wherein the configuration panel includes the device configuration panel and/or the link configuration panel.

Configuration of the configuration panel is completed based on the third user operation. The configuration panel is for configuring the attribute information of the target presentation model and/or the target power distribution link, so that the user can learn the attribute information of the target presentation model and target power distribution link thereof during operation in time, and any fault can be located accurately and quickly.

In a possible design, the data generation module is further configured to:
on reception of and in response to a custom configuration operation on a display page of the device configuration panel and/or the link configuration panel, acquire an attribute category selected by the custom configuration operation, wherein the attribute category is a category of the attribute information.

Through the configuration panel, the user is allowed to configure a category of the attribute information according to a user demand, which facilitates display of the attribute information of the configured attribute category. Hence, the users can learn a status of the power distribution devices and the power distribution link in time, and a fault can be located quickly.

In a possible design, the apparatus further includes a first presentation module, which is configured to:
receive a fourth user operation on a first target power distribution device, and generate a status progress bar in response to the fourth user operation, wherein the status progress bar presents a health status of the first target power distribution device.

Based on the fourth user operation, the health status of the power distribution device can be presented through the power distribution link diagram, which facilitates prediction of a possible fault in the power distribution device and is beneficial to management and maintenance of the power distribution device.

In a possible design, the apparatus further includes a second presentation module, which is configured to:
receive a fifth user operation on a second target power distribution device and/or a first target power distribution link, and display an attribute display panel in response to the fifth user operation, wherein the attribute display panel is for displaying the respective attribute information of the second target power distribution device and/or the first target power distribution link during operation.

Through the fifth user operation, the attribute information of the selected corresponding power distribution device and/or the power distribution link during operation can be displayed in the power distribution link diagram. Hence, the user can obtain the attribute information in real time.

In a possible design, the apparatus further includes a third presentation module, which is configured to:
receive a sixth user operation on a second target power distribution link, and display an upstream power distribution device and a downstream power distribution device connected to the second target power distribution link in response to the sixth user operation.

Through the sixth user operation, the upstream power distribution device and the downstream power distribution device of the power distribution link selected by the sixth user operation can be displayed in the power distribution link diagram. In a case where a power distribution device or power distribution link has an abnormality, the upstream and downstream power distribution devices of the power distribution link having the abnormality can be located quickly, which facilitates repair of the abnormality.

In a possible design, the apparatus further includes a fourth presentation module, which is configured to:
receive a seventh user operation on a third target power distribution link, and hide the third target power distribution link or identify the third target power distribution link with a feature in response to the seventh user operation.

Through the seventh user operation, the corresponding power distribution link selected by the seventh user operation can be displayed or identified with a feature in the power distribution link diagram, so that the user can adjust the power distribution link which is identifiable with a feature, as needed.

In a possible design, the apparatus further includes an early warning module, which is configured to:
acquire the attribute information of a third target power distribution device and/or a fourth target power distribution link; and
generate an early warning signal and performing an early warning according to the early warning signal, on determining, based on the attribute information, that there is an abnormality in the third target power distribution device and/or the fourth target power distribution link.

The early warning signal is generated based on the attribute information. Through the early warning signal, the abnormal power distribution device and/or power distribution link can be early warned in time so that maintenance personnel can be notified. In this way, an early warning notification capability of the power distribution link diagram is improved.

In a third aspect, an electronic device is provided in the present disclosure. The electronic device includes a processor and a memory communicatively connected to the processor, wherein
the memory stores computer executable instructions; and
the processor is configured to execute the computer executable instructions stored in the memory to implement any possible method for configuring a power distribution link diagram provided in the first aspect.

In a fourth aspect, a computer-readable storage medium is provided in the present disclosure. The computer-readable storage medium has computer executable instructions stored thereon, and the computer executable instructions, when executed by a processor, are configured to implement any possible method for configuring a power distribution link diagram provided in the first aspect.

In a fifth aspect, a computer program product is provided in the present disclosure. The computer program product includes computer-executable instructions, which, when executed by a processor, are configured to implement any possible method for configuring a power distribution link diagram provided in the first aspect.

The method, the apparatus, device and the storage medium for configuring a power distribution link diagram are provided in the present disclosure. The first user operation performed by the user on the power distribution device list in the first interface is received first, the presentation model corresponding to the object selected by the first user operation is generated in response to the first user operation, and the presentation model is displayed in the configuration area of the first interface, wherein the presentation model includes the power distribution device model and/or the micro-site model composed of power distribution devices. Then, the power distribution link between presentation models is generated and displayed on reception of and in response to the second user operation. The configuration panel for the target presentation model and/or the target power distribution link is generated and displayed, on reception of and in response to the third user operation on the target presentation model and/or the target power distribution link. The configuration panel is for configuring attribute information of a power distribution device corresponding to the target presentation model and/or the target power distribution link during operation. The method for quickly configuring a power distribution link diagram is provided, with which a user is allowed to easily view all power distribution devices in an entire data center and distribution links thereof, a visualization level of the power distribution link diagram is improved, and an operation complexity of configuring the link diagram is reduced. Hence, a great convenience is realized for power distribution maintenance and management of the data center.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without any creative effort.
Figure 1 is a schematic diagram of an application scenario according to an embodiment of the present disclosure.
Figure 2 is a schematic flowchart of a method for configuring a power distribution link diagram according to an embodiment of the present disclosure;
Figure 3 and Figure 4 are schematic diagrams of configuring power distribution device models and micro-site models according to an embodiment of the present disclosure;
Figure 5 is a schematic diagram of configuring a power distribution link according to an embodiment of the present disclosure;
Figure 6 is a schematic diagram of a selection pop-up box according to an embodiment of the present disclosure;
Figure 7 is a schematic diagram of configuring a power distribution link according to another embodiment of the present disclosure;
Figure 8 and Figure 9 are schematic diagrams of a configuration panel according to an embodiment of the present disclosure;
Figure 10 is a schematic diagram of a toolbar area according to an embodiment of the present disclosure;
Figure 11 is a schematic diagram of a status progress bar of a displayed power distribution device according to an embodiment of the present disclosure;
Figure 12 is a schematic diagram of an attribute display panel according to an embodiment of the present disclosure;
Figure 13 is a schematic diagram of upstream and downstream power distribution devices of a displayed power distribution link according to an embodiment of the present disclosure;
Figure 14 and Figure 15 are schematic diagrams of displaying and hiding a power distribution link according to an embodiment of the present disclosure;
Figure 16 is a schematic structural diagram of an apparatus for configuring a power distribution link diagram according to an embodiment of the present disclosure; and
Figure 17 is a schematic structural diagram of an electronic device according to an embodiment of the present disclosure.

### DETAILED DESCRIPTION

Exemplary embodiments are described in detail hereinafter, examples of which are illustrated in the accompanying drawings. When the following description refers to the drawings, the same numbers in different drawings refer to the same or similar elements, unless otherwise indicated. The embodiments described in the following exemplary embodiments do not represent all embodiments consistent with the present disclosure. On the contrary, they are merely examples of the method and apparatus consistent with aspects of the present disclosure as detailed in the appended claims.

The terms such as "first", "second", "third", "fourth" and the like (if any) in the description, claims and drawings of the present disclosure are only used to distinguish similar objects, rather than describe a particular or chronological order. It should be understood that data used in such manner may be interchanged appropriately, so that the embodiments of the present disclosure described herein may be, for example, implemented in an order other than those illustrated or described herein. Moreover, the terms "include (comprise)", "have", and any other variants thereof are intended to cover a non-exclusive inclusion. For example, a process, method, system, product, or device that includes a list of steps or units is not necessarily limited to the expressly listed steps or units, but may include other steps or units not expressly listed or inherent to the process, method, product, or device.

In the visual power distribution link diagram, all power distribution devices are presented in a three-dimensional diagram and are connected to each other through lines. Such a power distribution link diagram allows users to clearly learn about connection relationships of power distribution devices in the entire data center and understand directions of the power distribution links. More importantly, when a power distribution device or a power distribution link has an abnormality, the power distribution link diagram can help users quickly and accurately locate the fault and determine any upstream and downstream device that may be affected, so that the fault can be quickly repaired. However, most of the existing visualization technologies can display only one or a few devices, and cannot fully display the power distribution links and relative positions of the devices in the entire data center. Moreover, due to the professionalism and complexity of the power distribution link diagram, configuration of the power distribution link diagram is a difficult task for non-professionals.

In view of the above problems in the conventional technology, the present disclosure provides a method, an apparatus, a device, and a storage medium for configuring a power distribution link diagram. Inventive concepts of the method for configuring a power distribution link diagram provided in the present disclosure are described below. First, on reception of and in response to a first user operation on the power distribution devices in the first interface, a presentation model corresponding to an object selected by the first operation is generated and displayed in the configuration area of the first interface. The power distribution link between presentation models is generated and displayed based on a second user operation. Then the configuration panel is generated for the presentation model and/or the power distribution link selected by a third user operation based on the third user operation. The configuration panel is utilized to configure attribute information of the power distribution device corresponding to the selected presentation model and/or the selected power distribution link during operation, to complete visualization of the power distribution link diagram. In this way, it is convenient for the user to view the power distribution devices at sites of the data center and the power distribution links thereof, in the visual interface. Hence, it is convenient for power distribution maintenance and management of the data center. In addition, a complexity of configuration operations is reduced, and a practicality of configuration of a power distribution link diagram is improved.

Hereinafter, an exemplary application scenario according to an embodiment of the present disclosure is introduced.

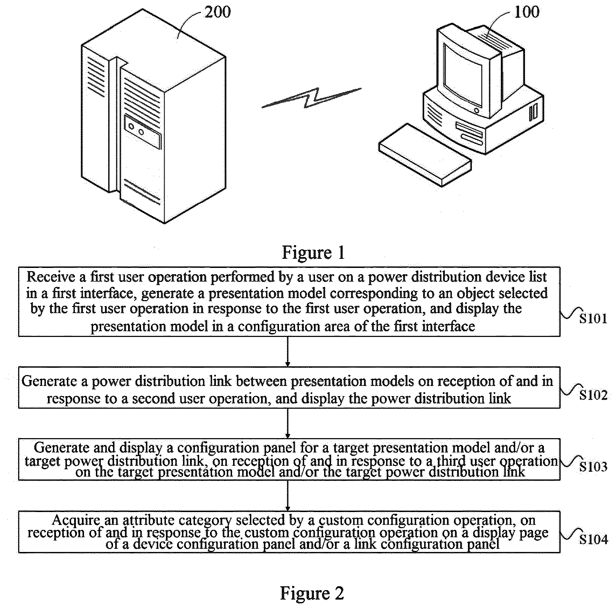

Figure 1 is a schematic diagram of an application scenario according to an embodiment of the present disclosure. Based on user operations, a power distribution link diagram can be quickly generated for a data center 200, so that power distribution devices and power distribution links at sites of the data center 200 are visualized in a configuration area of a first interface. Hence, a user is allowed to easily view all power distribution devices in an entire data center and power distribution links thereof, a visualization level of the power distribution link diagram is improved, and an operation complexity of the power distribution link diagram is reduced. Hence, a great convenience is realized for power distribution maintenance and management of the data center.

In some embodiments, an electronic device 100 may be, for example, a computer, a server, a smart phone, a tablet, a smart wearable device, and the like. A device type of the electronic device 100 is not limited in the embodiments of the present disclosure. The electronic device 100 shown in Figure 1 is a computer, as an example.

It should be noted that the above-mentioned application scenarios are only illustrative. The method, apparatus, device, and storage medium for configuring a power distribution link diagram provided in the embodiments of the present disclosure include but are not limited to these application scenarios.

Figure 2 is a schematic flowchart of a method for configuring a power distribution link diagram according to an embodiment of the present disclosure. As shown in Figure 2, the method for configuring a power distribution link diagram according to an embodiment of the present disclosure includes steps S101 to S104.

In S101, a first user operation performed by a user on a power distribution device list in a first interface is received, a presentation model corresponding to an object selected by the first user operation is generated in response to the first user operation, and the presentation model is displayed in a configuration area of the first interface.

The presentation model includes a power distribution device model and/or a micro-site model composed of power distribution devices.

The first interface is an interface for presenting the presentation model, which is displayed by the electronic device to the user. The first interface is preset with a power distribution device list. The configuration area is an interface where the configured power distribution link diagram is located. The electronic device receives the first user operation performed by the user on the power distribution device list in the first interface, generates a presentation model corresponding to an object selected from the power distribution device list by the first user operation in response to the first user operation. The object selected by the first user operation may be a power distribution device and/or a micro-site composed of power distribution devices. Accordingly, the generated presentation model includes a model corresponding to a power distribution device selected by the first user operation (that is, a power distribution device model), and/or a model corresponding to a micro-site composed of power distribution devices selected by the first user operation (that is, a micro-site model). In actual working conditions, specific content of the presentation model is determined by the object selected by the first user operation.

In some embodiments, the first user operation by the user may be performed with reference to a drawing of the data center, for example, to select a corresponding power distribution device and/or micro-site composed of power distribution devices from the power distribution devices at sites of the data center.

It should be noted that a site is a management solution of the data center, which is an advanced room manager for the data center. The site can help the data center manage and distribute power to power distribution devices more efficiently. Meanwhile, the site maximizes space usage efficiency by optimizing a layout of power distribution devices, ensuring a well working of the power distribution devices without taking up too much space. The power distribution devices of a site may form a micro-site, or be distributed around the micro-site. The power distribution devices that constitute a micro-site may be configured in advance, and the micro-site may be understood as a sub-site within the site.

In a possible design, step S 101 may include the following possible implementations.

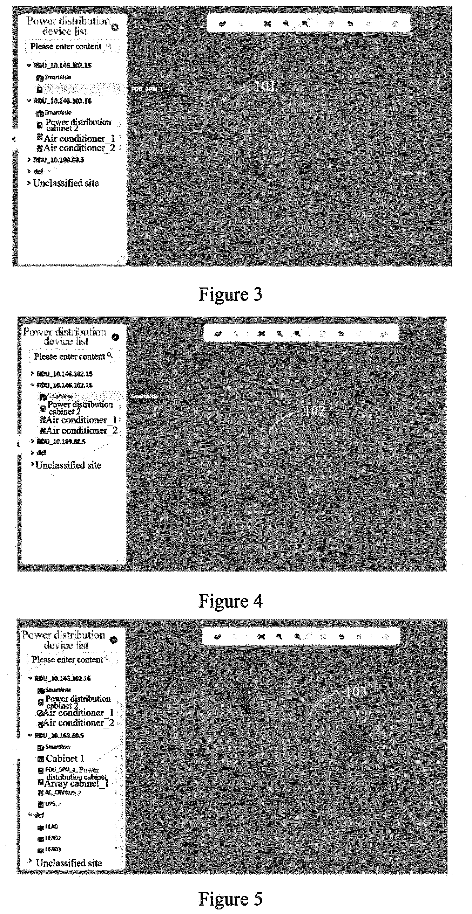

For example, the electronic device is preset with a power distribution device list, such as the power distribution device list in Figure 3 and Figure 4. In the power distribution device list, power distribution devices and/or micro-sites under each site are categorized in a classified manner. For example, as shown in Figure 3, RDU_10.146102.15 in the power distribution device list is a name of a site, and a drop-down menu of this site is preset with power distribution devices at the site. An unclassified site means the site that has not yet been assigned a category name. The user selects, from the power distribution device list, the power distribution device and/or micro-site composed of the power distribution devices to be configured currently. The electronic device receives the first user operation, and in response to the first user operation, generates a respective model of the power distribution device and/or micro-site selected by the first user operation, that is, the presentation model, and output the presentation model in the configuration area of the first interface.

Alternatively, the first user operation may include, but is not limited to, dragging, clicking, double-clicking and other operations by which a corresponding power distribution device and/or micro-site can be selected from the power distribution device list. Figure 3 and Figure 4 respectively show a power distribution device model 101 and a micro-site model 102 generated through a drag operation.

In S 102, a second user operation is received and a power distribution link between presentation models is generated in response to the second user operation, and the power distribution link is displayed.

The presentation model is stored after being generated. A connection line between the power distribution device models and/or between the power distribution device model and a power distribution device in the micro-site model is generated further based on the second user operation by the user. Thereby, configuration of the power distribution link is completed, and the generated power distribution link is outputted and displayed. It can be understood that the second user operation is for selecting the corresponding power distribution device model and/or micro-site model for which a power distribution link needs to be configured.

In a possible design, step S 102 may include the following possible implementations.

The user may perform the second user operation on the power distribution device model that needs to be configured with a power distribution link based on a circuit drawing of the data center, so that the corresponding power distribution device model that needs to be configured with a power distribution link is selected through the second user operation. The electronic device receives the second user operation, and, in response to the second user operation, automatically generates a connection line between the selected power distribution device models according to a positional relationship between the power distribution devices in the selected power distribution device models, that is, generates and displays the power distribution link between the selected power distribution device models, such as the power distribution link 103 in Figure 5.

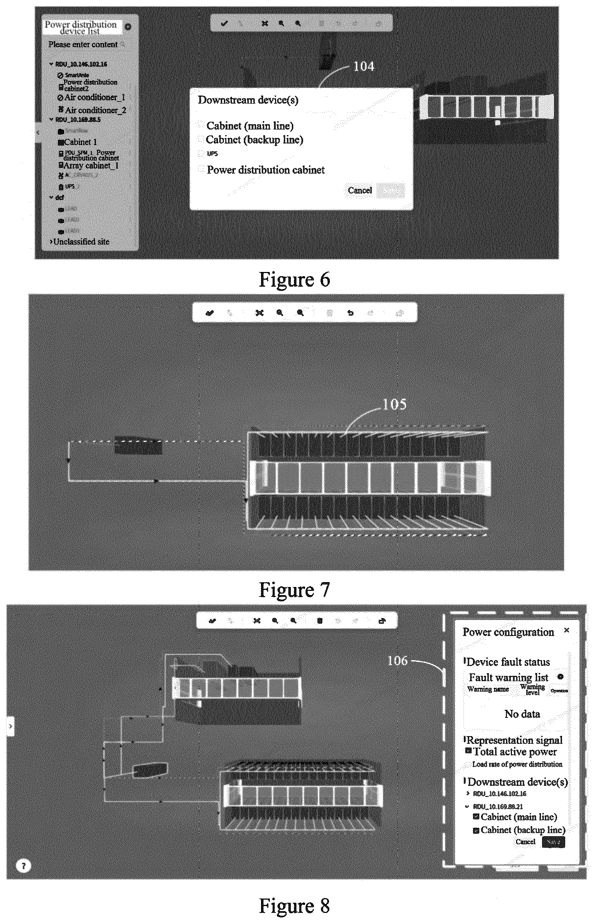

In a case where a power distribution link between a power distribution device model and a micro-site model needs to be further generated, or only the power distribution link between a power distribution device model and a micro-site model needs to be generated, similarly, the user may select the power distribution device model and the micro-site model that need to be configured with the power distribution link through the second user operation based on the circuit drawing in data center. The electronic device receives the second user operation. In response to the second user operation, the electronic device may first generate and display a selection pop-up box 104 as shown in Figure 6. The user performs a selection operation on the selection pop-up box to select, from the selection pop-up box, the power distribution device that needs to be configured with a power distribution link in the micro-site model. The electronic device receives the selection operation on the selection pop-up box by the user, and obtains the power distribution device in the micro-site model. Then, a connection line is automatically generated based on the power distribution device model selected by the second user operation and the selected power distribution device in the micro-site model to generate a power distribution link 105 between the selected power distribution device model and the selected power distribution device in the micro-site model, shown as a white line in Figure 7. Thereby, configuration of the power distribution link between the power distribution device model and the micro-site model is completed.

In some embodiments, the second user operation may include, but is not limited to, any one of a single-click operation, a double-click operation, and a selection operation.

In S103, a configuration panel for a target presentation model and/or a target distribution link is generated and displayed, on reception of and in response to a third user operation on the target presentation model and/or the target distribution link.

The configuration panel is for configuring attribute information of a power distribution device corresponding to the target presentation model and/or the target power distribution link during operation.

After the configuration of the power distribution link is completed, the power distribution link is stored. Further, a presentation model and/or power distribution link that needs to be bound with the attribute information may be selected through the third user operation based on an actual situation. The attribute information includes alarm data and attribute data thereof or the like of the power distribution device in the presentation model and/or the power distribution link during operation.

For example, the electronic device receives the third user operation, generates and displays a corresponding configuration panel for the presentation model and/or power distribution link selected by the third user operation in response to the third user operation, and then performs binding of attribute information of the presentation model and/or target power distribution link selected by the third user operation through the configuration panel. The target presentation model is the presentation model selected by the third user operation, and the target power distribution link is the power distribution link selected by the third user operation.

Specifically, the user may perform the third user operation on a corresponding presentation model, indicating that a configuration panel needs to be generated for the corresponding presentation model. The attribute information is bound to the corresponding presentation model through the configuration panel. In response to the third user operation on the corresponding presentation model, the electronic device generates and displays a device configuration panel 106, as shown in the dotted box in Figure 8, for the corresponding power distribution device in the presentation model.

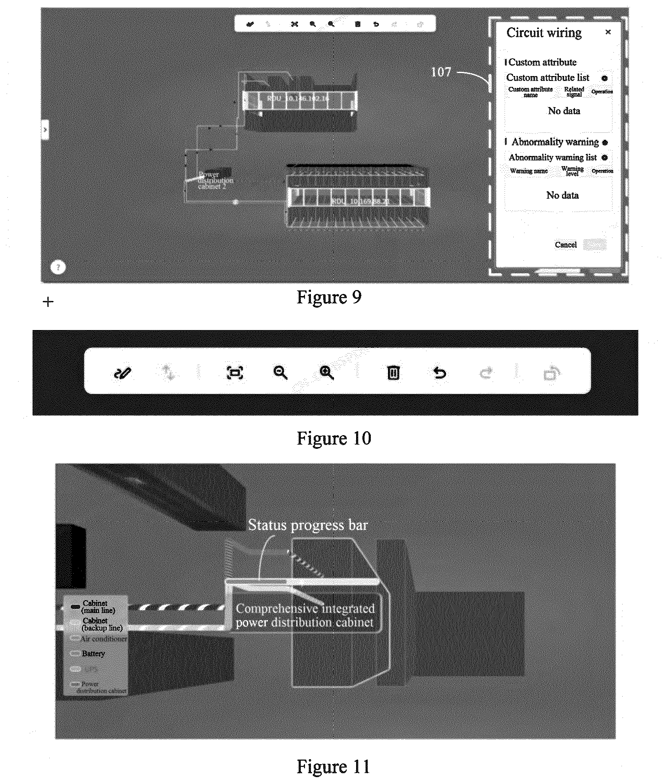

The user may also perform the third user operation on a corresponding power distribution link, indicating that a configuration panel needs to be generated for the corresponding power distribution link, and the attribute information is bound to the corresponding power distribution link through the configuration panel. In response to the third user operation on the corresponding power distribution link, the electronic device generates and displays a link configuration panel 107, as shown in the dotted box in Figure 9, for the corresponding power distribution link.

In some embodiments, the configuration panel may include the device configuration panel and/or the link configuration panel.

In S104, on reception of and in response to a custom configuration operation on a display page of the device configuration panel and/or the link configuration panel, an attribute category selected by the custom configuration operation is acquired.

The attribute category is a category of the attribute information.

The user may perform a custom configuration operation on respective display pages of the device configuration panel and/or the link configuration panel. The electronic device receives the custom configuration operation and acquires, in response to the custom configuration operation, a category of attribute information (that is, an attribute category) to be bound that is selected by the user through the custom configuration operation.

For example, as shown in Figure 8, on the configuration panel corresponding to the presentation model, (that is, the device configuration panel), various attribute categories such as a device fault status, a display signal, and a downstream device or the like can be configured. For example, the user may tick a corresponding content. The ticking operation is a custom configuration operation performed by the user. On reception of and in response to the ticking operation by the user, the electronic device acquires the corresponding attribute category ticked by the ticking operation, to complete the configuration of the attribute category of the power distribution device corresponding to a current presentation model. The ticked attribute category is the category of attribute information bound to the presentation model selected by the third user operation.

Additionally or alternatively, for example, as shown in Figure 9, on the configuration panel for the power distribution link (that is, the link configuration panel), various attribute categories such as a custom attribute and an abnormal alarm or the like can be configured. For example, the user may tick a corresponding attribute category of a current power distribution link. The ticking operation is a custom configuration operation performed by the user. On reception of and in response to the ticking operation by the user, the electronic device acquires the corresponding attribute category ticked by the ticking operation, to complete the configuration of the attribute category of the current power distribution link. The ticked attribute category is the category of attribute information bound to the power distribution link selected by the third user operation.

With the above steps, after the configuration of the presentation model and the configuration of the power distribution link are completed, the configuration of the configuration panel for the selected corresponding presentation model and/or power distribution link is further completed. Thereby, configuration of the power distribution link diagram of the site is completed, realizing visualized presentation of the power distribution link diagram in the configuration area of the first interface.

In some embodiments, the presentation model may be a two-dimensional presentation, which facilitates configuration operations, such as dragging, rotating, and data displaying, on the corresponding power distribution device and/or power distribution link.

As can be seen from the description of the above embodiments, in the method for configuring a power distribution link diagram provided in the embodiment of the present disclosure, the first user operation performed by the user on the power distribution device list in the first interface is received first, the presentation model of the object selected by the first user operation is generated in response to the first user operation, and the presentation model is displayed in the configuration area of the first interface, where the presentation model includes the power distribution device model and/or the micro-site model composed of power distribution devices. Then, the power distribution link between the presentation models is generated and displayed on reception of and in response to the second user operation. The configuration panel for the target presentation model and/or the target power distribution link is generated and displayed, on reception of and in response to the third user operation on the target presentation model and/or the target power distribution link. The configuration panel is for configuring attribute information of a power distribution device corresponding to the target presentation model and/or the target power distribution link during operation. The method for quickly configuring a power distribution link diagram is provided, with which a user is allowed to easily view all power distribution devices in an entire data center and power distribution links thereof, a visualization level of the power distribution link diagram is improved, and an operation complexity of configuring the link diagram is reduced. Hence, a great convenience is realized for power distribution maintenance and management of the data center.

In a possible design, the first interface may further include a toolbar area. The toolbar area includes a custom tool for configuring the power distribution link diagram.

In some embodiments, the custom tool may include, but not limited to at least one of a line drawing tool, an adjustment tool, a deletion tool, and an undo operation tool.

For example, in the toolbar area shown in Figure 10, the custom tool from left to right may include: a line drawing tool, with which a line drawing mode can be entered so that connection lines can be generated on the power distribution link diagram between power distribution device models and between a power distribution device model and a micro-site model; a line inverting tool, with which a connection of a selected power distribution link can be inverted, for example; an adjust-to-center-perspective tool, with which a perspective of the electronic device can be adjusted to be right above the configuration area after the configuration area is rotated; a perspective zoom out tool, with which the power distribution link diagram can be reduced according to a preset ratio; a perspective zoom in tool, with which the power distribution link diagram can be enlarged according to a preset proportion; a deletion tool, with which a power distribution device model, a micro-site model, a power distribution link or other units in the power distribution link diagram can be deleted; an undo tool, with which a previous operation on the power distribution link diagram such as adding, configuring, deleting, moving, or rotating can be withdrawn; a redo tool, with which an undo operation can be canceled; and a rotation tool, with which the selected power distribution device model and micro-site model, or the entire power distribution link diagram can be rotated by a preset angle.

In some embodiments, the adjustment tool may be, for example, any one or more of a line inverting tool, an adjust-to-center-perspective tool, a perspective zoom out tool, a perspective zoom in tool, and a rotation tool, as shown in Figure 10; and the undo operation tool may be, for example, an undo tool and a redo tool, as shown in Figure 10.

The toolbar area provided in the first interface allows the user to adjust and view the power distribution link diagram in time based on an actual situation, so that a more intuitive and flexible perspective can be provided for the power distribution link diagram.

In a possible design, the method for configuring a power distribution link diagram according to an embodiment of the present disclosure further includes possible implementations of generating a presentation interface as follows.

For example, the presentation interface may display a health status of a power distribution device, as shown in Figure 11. Specifically, the user may perform a fourth user operation on some power distribution devices. The fourth user operation is for selecting a power distribution device whose health status needs to be displayed. The power distribution device selected by the fourth user operation of the user may be collectively referred to as a first target power distribution device. The electronic device receives the fourth user operation on the first target power distribution device, and generates a status progress bar of the first target power distribution device in response to the fourth user operation. The status progress bar is for displaying a health status of the first target power distribution device. The health status displayed by the status progress bar may be a load rate of the first target power distribution device, and a possible fault of the first target power distribution device may be predicted from the health status. In some embodiments, the fourth user operation may be various operations such as single-clicking, selecting, and swiping, which is not limited in the embodiments of the present disclosure.

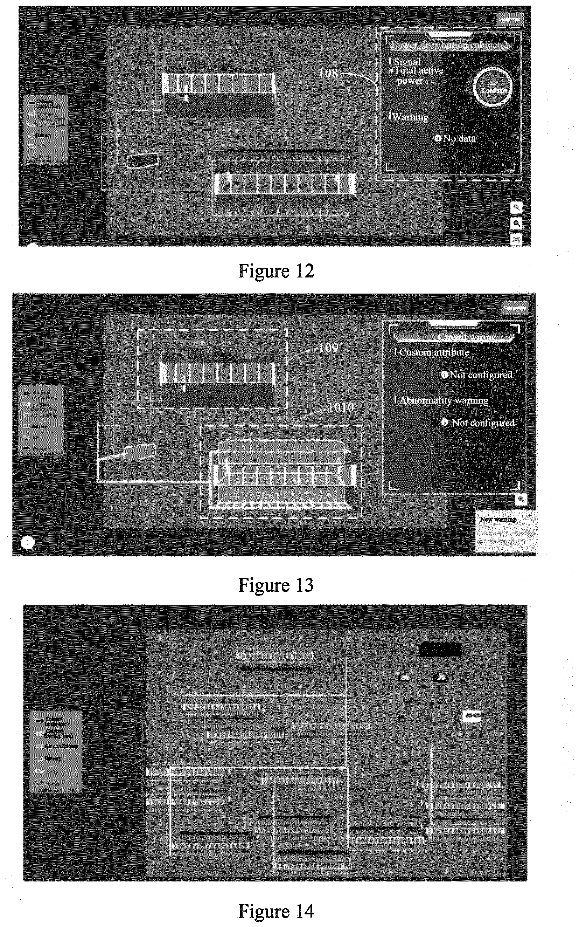

For another example, the presentation interface may further display an attribute display panel for the power distribution device and/or power distribution link, as shown in Figure 12. Specifically, the user may perform a fifth user operation on some power distribution devices and/or power distribution links. The fifth user operation is for selecting the power distribution device and/or power distribution link for which an attribute display panel needs to be displayed. The power distribution device selected by the fifth user operation of the user may be collectively referred to as a second target power distribution device. The power distribution link selected by the fifth user operation may be collectively referred to as a first target power distribution link. The electronic device receives the fifth user operation on the second target power distribution device and/or the first target power distribution link, and then display attribute display panels respectively for the second target power distribution device and/or the first target power distribution link in response to the fifth user operation. The attribute display panel is as the dotted box 108 shown in Figure 12. The attribute display panel is for displaying the respective attribute information of the second target power distribution device and/or the first target power distribution link during operation. The attribute information is configured through the configuration panel as shown in Figure 8 and/or Figure 9. In some embodiments, the fifth user operation may be various operations such as single-clicking, selecting, and swiping, which is not limited in the embodiments of the present disclosure.

For another example, the presentation interface may further display upstream and downstream power distribution devices of the power distribution link shown in Figure 13, such as 109 and 1010 shown in dotted line boxes in Figure 13. The number of the upstream and downstream power distribution devices shown in Figure 13 may be more than one. Specifically, the user may perform a sixth user operation on some power distribution links. The sixth user operation is for selecting a power distribution link whose upstream and downstream power distribution devices need to be displayed. The power distribution link selected by the sixth user operation of the user may be collectively referred to as a second target power distribution link. The electronic device receives the sixth user operation on the second target power distribution link, and then displays an upstream power distribution device and a downstream power distribution device connected to the second target power distribution link in response to the sixth user operation. In actual working conditions, the upstream and downstream power distribution devices may be displayed in a manner of highlighting or others, in order to be viewed by the user intuitively. The sixth user operation may be various operations such as single-clicking, selecting, and swiping, which is not limited in the embodiments of the present disclosure.

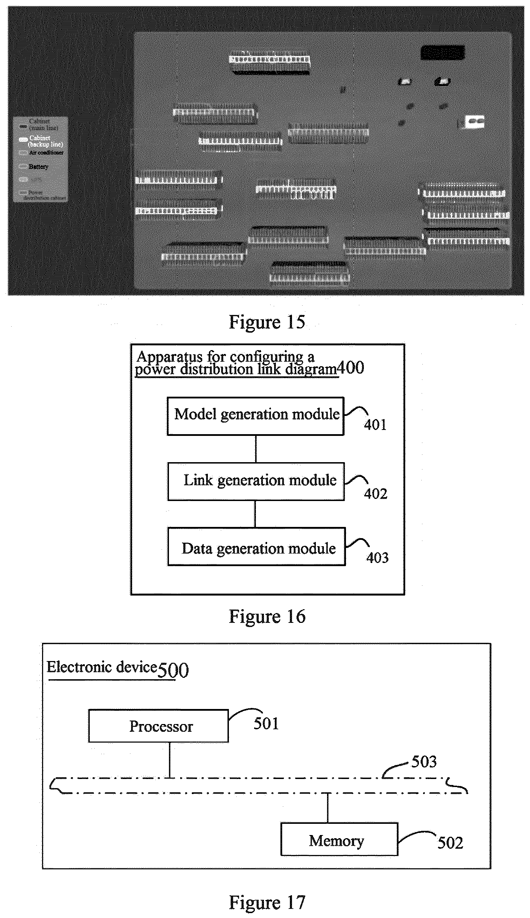

As another example, the presentation interface may further display the power distribution link or identify the power distribution link with a feature. Specifically, the user may perform a seventh user operation on some power distribution links that need to be hidden or identified with a feature. The seventh user operation is for selecting a power distribution link that needs to be identified with a feature or hidden. The power distribution link selected by the seventh user operation is collectively referred to as a third target power distribution link. The electronic device receives the seventh user operation on the third target power distribution link, and then identifies with a feature or hides the third target power distribution link in response to the seventh user operation. A feature identification may be displayed in a manner of highlighting, feature color identification, or others, for example. For example, as shown in Figure 14 and Figure 15, some power distribution links in Figure 14 are hidden in Figure 15.

Furthermore, the presentation interface may further notify a possible abnormality or fault in a power distribution device and/or power distribution link through an early warning signal. For example, the electronic device may obtain in real time the attribute information of each power distribution device and/or each power distribution link in the power distribution link diagram, that is, the attribute information of the third target power distribution device and/or the fourth target power distribution link. For example, it can be determined whether there is an abnormality or fault in a current power distribution device and/or power distribution link based on attribute information, for example, a fault status, an abnormality warning and other alarm data included in the attribute information. For example, a specific parameter included in the alarm data is compared with a preset parameter. It is determined that there is an abnormality or fault in the current power distribution device and/or power distribution link in a case where the specific parameter exceeds a corresponding threshold. In this case, an early warning signal is generated, and an early warning is issued based on the early warning signal. For example, the early warning signal is a flashing signal, and the power distribution device and/or power distribution link having an abnormality or fault in the power distribution link diagram flashes to provide an early warning, thereby facilitating notification of maintenance personnel.

In some embodiments, the presentation interface may be a three-dimensional interface to facilitate display of corresponding content.

It can be seen from the description of the above embodiments that the method for configuring a power distribution link diagram provided by the embodiments of the present disclosure may further generate a presentation interface for the power distribution link diagram. Through the presentation interface, the power distribution link diagram can be viewed in multiple dimensions, so that the status of power distribution devices and power distribution links in the power distribution link diagram can be learned more intuitively, a possible fault or abnormality can be located accurately and quickly, and an early warning can be provided timely, thereby facilitating power distribution maintenance and management of the data center.

Figure 16 is a schematic structural diagram of an apparatus for configuring a power distribution link diagram according to an embodiment of the present disclosure. As shown in Figure 16, an apparatus 400 for configuring a power distribution link diagram according to an embodiment of the present disclosure includes a model generation module 401, a link generation module 402, and a data generation module 403.

The model generation module 401 is configured to receive a first user operation performed by a user on a power distribution device list in a first interface, generate a presentation model corresponding to an object selected by the first user operation in response to the first user operation, and display the presentation model in a configuration area of the first interface, wherein the presentation model includes a power distribution device model and/or a micro-site model composed of power distribution devices.

The link generation module 402 is configured to generate a power distribution link between presentation models on reception of and in response to a second user operation, and display the power distribution link.

The data generation module 403 is configured to generate and display a configuration panel for a target presentation model and/or a target power distribution link, on reception of and in response to a third user operation on the target presentation model and/or the target power distribution link, wherein the configuration panel is for configuring attribute information of a power distribution device corresponding to the target presentation model and/or the target power distribution link during operation.

In a possible design, the first interface further includes a toolbar area.

The toolbar area includes a custom tool for configuring the power distribution link diagram, and the custom tool includes at least one of a line drawing tool, an adjustment tool, a deletion tool, and an undo operation tool.

In a possible design, the link generation module 402 is specifically configured to:
generate the power distribution link between the power distribution device models according to a positional relationship between power distribution devices in the power distribution device models, in response to the second user operation on the power distribution device models; and/or
generate and display a selection pop-up box in response to the second user operation on the power distribution device model and the micro-site model, and generate the power distribution link between a power distribution device selected from the micro-site model and the power distribution device model on reception of and in response to a selection operation on the selection pop-up box.

In a possible design, the data generation module 403 is specifically configured to:
generate and display a device configuration panel for a power distribution device corresponding to the target presentation model, in response to the third user operation on the target presentation model, wherein the target presentation model is a presentation model selected by the third user operation; and
generate and display a link configuration panel for the target power distribution link in response to the third user operation on the target power distribution link, wherein the target power distribution link is a power distribution link selected by the third user operation;
wherein the configuration panel includes the device configuration panel and/or the link configuration panel.

In a possible design, the data generation module 403 is further configured to:
on reception of and in response to a custom configuration operation on a display page of the device configuration panel and/or the link configuration panel, acquire an attribute category selected by the custom configuration operation, wherein the attribute category is a category of the attribute information.

In a possible design, the apparatus 400 for configuring a power distribution link diagram according to an embodiment of the present disclosure further includes a first presentation module. The first presentation module is configured to:
receive a fourth user operation on a first target power distribution device, and generate a status progress bar in response to the fourth user operation, wherein the status progress bar is for presenting a health status of the first target power distribution device.

In a possible design, the apparatus 400 for configuring a power distribution link diagram according to an embodiment of the present disclosure further includes a second presentation module. The second presentation module is configured to:
receive a fifth user operation on a second target power distribution device and/or a first target power distribution link, and display an attribute display panel in response to the fifth user operation, wherein the attribute display panel is for displaying the respective attribute information of the second target power distribution device and/or the first target power distribution link during operation.

In a possible design, the apparatus 400 for configuring a power distribution link diagram according to an embodiment of the present disclosure further includes a third presentation module. The third presentation module is configured to:
receive a sixth user operation on a second target power distribution link, and display an upstream power distribution device and a downstream power distribution device connected to the second target power distribution link in response to the sixth user operation.

In a possible design, the apparatus 400 for configuring a power distribution link diagram according to an embodiment of the present disclosure further includes a fourth presentation module. The fourth presentation module is configured to:
receive a seventh user operation on a third target power distribution link, and hide the third target power distribution link or identify the third target power distribution link with a feature in response to the seventh user operation.

In a possible design, the apparatus 400 for configuring a power distribution link diagram according to an embodiment of the present disclosure further includes an early warning module. The early warning module is configured to:
acquire the attribute information of a third target power distribution device and/or a fourth target power distribution link; and
generate an early warning signal and performing an early warning according to the early warning signal, on determining, based on the attribute information, that there is an abnormality in the third target power distribution device and/or the fourth target power distribution link.

The apparatus for configuring a power distribution link diagram provided by embodiments of the present disclosure can perform the corresponding steps of the method for configuring a power distribution link diagram in the above method embodiments. Implementation principles and technical effects of the apparatus are similar to the method, and are not repeated here.

Figure 17 is a schematic structural diagram of an electronic device according to an embodiment of the present disclosure. As shown in Figure 17, the electronic device 500 may include a processor 501 and a memory 502 communicatively connected to the processor 501.

The memory 502 is configured to store a program. Specifically, the program may include program codes, which includes computer executable instructions.

The memory 502 may include a high-speed RAM memory, and may further include a non-volatile memory, such as at least one magnetic disk memory.

The processor 501 is configured to execute the computer executable instructions stored in the memory 502, to implement the above method for configuring a power distribution link diagram.

The processor 501 may be a central processing unit (CPU), or an application specific integrated circuit (ASIC), or one or more integrated circuits configured to implement embodiments of the present disclosure.

Alternatively, the memory 502 may be either independent or integrated with the processor 501. In a case where the memory 502 is a device independent of the processor 501, the electronic device 500 may further include a bus 503.

The bus 503 is configured to connect the processor 501 and the memory 502. The bus may be an industry standard architecture (ISA) bus, a peripheral component interconnect (PCI) bus, or an extended industry standard architecture (EISA) bus, or the like. The bus may include an address bus, a data bus, a control bus, and the like, which is not limited to only one bus or one type of buses.

Alternatively, for a specific implementation in which the memory 502 and the processor 501 are integrated on one chip, the memory 502 and the processor 501 may communicate through an internal interface.

A computer-readable storage medium is further provided in the present disclosure. The computer-readable storage medium may include a U disk, a mobile hard disk, a read-only memory (ROM), a random-access memory (RAM), a magnetic disk or optical disk, and other media capable of storing program codes. Specifically, the computer-readable storage medium stores computer-executable instructions, and the computer-executable instructions are used for the method in any of the above embodiments.

A computer program product is further provided in the present disclosure. The computer program product includes computer executable instructions that, when executed by a processor, implement the method in any of the above embodiments.

Other embodiments of the present disclosure will be apparent to those skilled in the art from consideration of the specification and practice of the disclosure here. The present disclosure is intended to cover any variation, application, or adapted modification of the present disclosure. Such variation, application, or adapted modification follow the general principles of the present disclosure and include common knowledge or common technical means in the art which are not disclosed in the present disclosure. The specification and the embodiments are only illustrative, and the actual scope and spirit of the present disclosure are defined by the claims.

It should be understood that the present disclosure is not limited to the precise structure described above and shown in the drawings. Various modifications and changes may be made without departing from the scope of the present disclosure. The scope of the present disclosure is limited by only the appended claims.

## Claims

1. A method for configuring a power distribution link diagram, which is **characterized in that** the method comprises:
receiving a first user operation performed by a user on a power distribution device list in a first interface, generating a presentation model corresponding to an object selected by the first user operation in response to the first user operation, and displaying the presentation model in a configuration area of the first interface, wherein the presentation model comprises a power distribution device model (101) and/or a micro-site model (102) composed of power distribution devices;
generating a power distribution link (103, 105) between presentation models on reception of and in response to a second user operation, and displaying the power distribution link (103, 105) ; and
generating and displaying a configuration panel for a target presentation model and/or a target power distribution link, on reception of and in response to a third user operation on the target presentation model and/or the target power distribution link, wherein the configuration panel is for configuring attribute information of a power distribution device corresponding to the target presentation model and/or the target power distribution link during operation.

2. The method for configuring a power distribution link diagram according to claim 1, which is **characterized in that** the first interface further comprises a toolbar area, and
the toolbar area comprises a custom tool for configuring the power distribution link diagram, and the custom tool comprises at least one of a line drawing tool, an adjustment tool, a deletion tool, and an undo operation tool.

3. The method for configuring a power distribution link diagram according to claim 2, which is **characterized in that** the generating a power distribution link (103, 105) between presentation models in response to the second user operation comprises:
generating the power distribution link (103, 105) between the power distribution device models (101) according to a positional relationship between power distribution devices in the power distribution device models (101), in response to the second user operation on the power distribution device models (101); and/or
generating and displaying a selection pop-up box (104) in response to the second user operation on the power distribution device model (101) and the micro-site model (102), and generating the power distribution link (103, 105) between a power distribution device selected from the micro-site model (102) and the power distribution device model (101) on reception of and in response to a selection operation on the selection pop-up box (104).

4. The method for configuring a power distribution link diagram according to claim 3, which is **characterized in that** the generating and displaying a configuration panel for a target presentation model and/or a target distribution link, in response to a third user operation on the target presentation model and/or the target distribution link, comprises:
generating and displaying a device configuration panel (106) for a power distribution device corresponding to the target presentation model, in response to the third user operation on the target presentation model, wherein the target presentation model is a presentation model selected by the third user operation; and
generating and displaying a link configuration panel (107) for the target power distribution link in response to the third user operation on the target power distribution link, wherein the target power distribution link is a power distribution link selected by the third user operation;
wherein the configuration panel comprises the device configuration panel (106) and/or the link configuration panel (107).

5. The method for configuring a power distribution link diagram according to claim 4, which is **characterized in that** the method further comprises:
on reception of and in response to a custom configuration operation on a display page of the device configuration panel (106) and/or the link configuration panel (107), acquiring an attribute category selected by the custom configuration operation, wherein the attribute category is a category of the attribute information.

6. The method for configuring a power distribution link diagram according to claim 1, which is **characterized in that** the method further comprises:
receiving a fourth user operation on a first target power distribution device, and generating a status progress bar in response to the fourth user operation, wherein the status progress bar is for presenting a health status of the first target power distribution device.

7. The method for configuring a power distribution link diagram according to claim 1, which is **characterized in that** the method further comprises:
receiving a fifth user operation on a second target power distribution device and/or a first target power distribution link, and displaying an attribute display panel (108) in response to the fifth user operation, wherein the attribute display panel (108) is for displaying the respective attribute information of the second target power distribution device and/or the first target power distribution link during operation.

8. The method for configuring a power distribution link diagram according to claim 1, which is **characterized in that** the method further comprises:
receiving a sixth user operation on a second target power distribution link, and displaying an upstream power distribution device and a downstream power distribution device connected to the second target power distribution link in response to the sixth user operation.

9. The method for configuring a power distribution link diagram according to claim 1, which is **characterized in that** the method further comprises:
receiving a seventh user operation on a third target power distribution link, and hiding the third target power distribution link or identifying the third target power distribution link with a feature in response to the seventh user operation.

10. The method for configuring a power distribution link diagram according to claim 5, which is **characterized in that** the method further comprises:
acquiring the attribute information of a third target power distribution device and/or a fourth target power distribution link; and
generating an early warning signal and performing an early warning according to the early warning signal, on determining, based on the attribute information, that there is an abnormality in the third target power distribution device and/or the fourth target power distribution link.

11. An apparatus (400) for configuring a power distribution link diagram, which is **characterized in that** the apparatus (400) comprises:
a model generation module (401), configured to receive a first user operation performed by a user on a power distribution device list in a first interface, generate a presentation model corresponding to an object selected by the first user operation in response to the first user operation, and display the presentation model in a configuration area of the first interface, wherein the presentation model comprises a power distribution device model (101) and/or a micro-site model (102) composed of power distribution devices;
a link generation module (402), configured to generate a power distribution link (103, 105) between presentation models on reception of and in response to a second user operation, and display the power distribution link (103, 105) ; and
a data generation module (403), configured to generate and display a configuration panel for a target presentation model and/or a target power distribution link, on reception of and in response to a third user operation on the target presentation model and/or the target power distribution link, wherein the configuration panel is for configuring attribute information of a power distribution device corresponding to the target presentation model and/or the target power distribution link during operation.

12. An electronic device (500), which is **characterized in that** the electronic device (500) comprises a processor (501) and a memory (502) communicatively connected to the processor (501), wherein
the memory (502) stores computer executable instructions; and
the processor (501) is configured to execute the computer executable instructions stored in the memory (502) to implement the method for configuring a power distribution link diagram according to any one of claims 1 to 10.

13. A computer-readable storage medium, which is **characterized in that** the computer-readable storage medium has computer executable instructions stored thereon, and the computer executable instructions, when executed by a processor (501), are configured to implement the method for configuring a power distribution link diagram according to any one of claims 1 to 10.

14. A computer program product, comprising computer-executable instructions, which, when executed by a processor (501), are configured to implement the method for configuring a power distribution link diagram according to any one of claims 1 to 10.
